(19) Europäisches Patentamt
European Patent Office
Office européen des brevets

(11) EP 4 338 812 A1

(12) EUROPEAN PATENT APPLICATION
published in accordance with Art. 153(4) EPC

(43) Date of publication:
**20.03.2024 Bulletin 2024/12**

(21) Application number: **22807137.9**

(22) Date of filing: **09.03.2022**

(51) International Patent Classification (IPC):
***B01D 39/00*** *(2006.01)* ***B01D 39/16*** *(2006.01)*
***B01D 39/20*** *(2006.01)* ***C08J 9/40*** *(2006.01)*
***D06M 15/333*** *(2006.01)*

(52) Cooperative Patent Classification (CPC):
**B01D 39/00; B01D 39/16; B01D 39/20; C08J 9/40; D06M 15/333**

(86) International application number:
**PCT/JP2022/010321**

(87) International publication number:
**WO 2022/239430 (17.11.2022 Gazette 2022/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.05.2021 JP 2021082512**
**26.07.2021 JP 2021121568**

(71) Applicant: **Hokuetsu Corporation**
**Nagaoka-shi**
**Niigata 940-0027 (JP)**

(72) Inventors:
- **FUKUSHIMA, Shota**
  **Nagaoka-shi, Niigata 940-0027 (JP)**
- **NEMOTO, Junji**
  **Nagaoka-shi, Niigata 940-0027 (JP)**
- **TAMURA, Atsushi**
  **Nagaoka-shi, Niigata 940-0027 (JP)**

(74) Representative: **v. Bezold & Partner Patentanwälte - PartG mbB**
**Ridlerstraße 57**
**80339 München (DE)**

# (54) FILTER MATERIAL FOR AIR FILTER AND PRODUCTION METHOD THEREFOR

(57) An object of the present disclosure is to provide a filter material for an air filter having improved particle collecting performance by providing a mesh-like network of polyvinyl alcohol, in a pore of a fluid permeation path of a support relatively, randomly in a plane direction and a thickness direction of the support. A method for producing a filter material for an air filter according to the present disclosure includes: an adhering step of getting a polyvinyl alcohol aqueous solution adhering to a support, having fluid permeability, to bring the support into a wet state; and a drying step of drying the polyvinyl alcohol aqueous solution adhering to the support in the wet state at 140°C or higher, in which the polyvinyl alcohol aqueous solution contains no other binder resins than polyvinyl alcohol, and the support, after the drying step, has the mesh-like network of polyvinyl alcohol, in the pore serving as a fluid permeation path, by drying the polyvinyl alcohol aqueous solution.

Fig. 1

1.0kV 8.4mm x5.00k SE(UL) 2021/01/15 11:30
10.0um

EP 4 338 812 A1

## Description

### Technical Field

An object of the present disclosure is to provide a filter material for an air filter in which particle collection performance is remarkably improved using polyvinyl alcohol, and a method for producing the same. More specifically, the present invention provides a method for producing, in a relatively short time, a filter material for an air filter suitable for air purification applications such as clean rooms or clean benches related to semiconductor, liquid crystal and bio-food industry, building air conditioning, internal combustion engines, and indoor spaces.

### Background Art

In order to collect submicron- to micron-sized particles in the air, a filter material for an air filter is generally used. The filter material for an air filter is roughly classified into a filter material for a coarse dust filter, a filter material for a medium performance filter, a filter material for a HEPA (High Efficiency Particulate Air) filter, and a filter material for an ULPA (Ultra Low Penetration Air) filter, depending on its collection performance. As basic characteristics, these filter materials for an air filter requires, in addition to low particle penetration of fine dust particles, low pressure loss in order to allow air to pass through the filter.

Regarding the filter material for an air filter, there is a proposal that usage of polyvinyl alcohol having a partial saponification degree of up to 90% makes a surface of a glass fiber hydrophobic and improves dispersibility of the fiber, to improve filter performance (See, for example, Patent Literature 1.).

In addition, regarding a nonwoven fabric filter having a high shape retention property in which the filter is hardly crushed in the thickness direction even when wind pressure is applied, there is a proposal of forming the filter by orienting polyvinyl alcohol microfibers in the thickness direction (See, for example, Patent Literature 2.) .

### Citation List

#### Patent Literature

Patent Literature 1: JP2008-194584 A
Patent Literature 2: WO2018/221063 A1

### Summary of Invention

#### Technical Problem

In Patent Literature 1, although polyvinyl alcohol contained as one of the binder resins for binding the glass fibers to each other, on the basis of keeping out of rapidly drying the filter material in a wet state, plays a role of enhancing dispersibility of the glass fibers, another mixed binder resin hinders formation of a mesh-like network of polyvinyl alcohol between fibers, so that a structure having a network cannot be obtained.

In Patent Literature 2, since the number of polyvinyl alcohol microfibers formed in a direction other than the thickness direction is small, the microfibers do not necessarily contribute to an increase in filter performance.

An object of the present disclosure is to provide a filter material for an air filter having filter performance, particularly particle collection performance, improved by using polyvinyl alcohol and providing the mesh-like network of polyvinyl alcohol, in a pore of a fluid permeation path of a support, relatively randomly in a planar direction and a thickness direction of the support. Further, an object of the present disclosure is to provide a method for producing this filter material for an air filter in a relatively short time.

#### Solution to Problem

A method for producing the filter material for an air filter according to the present invention includes: an adhering step of getting a polyvinyl alcohol aqueous solution adhering to the support, having fluid permeability, to bring the support into a wet state; and a drying step of drying the polyvinyl alcohol aqueous solution adhering to the support in the wet state at 140°C or higher, in which the polyvinyl alcohol aqueous solution contains no other binder resins than polyvinyl alcohol, and the support, after the drying step, has the mesh-like network of polyvinyl alcohol, in a pore serving as a fluid permeation path, by drying the polyvinyl alcohol aqueous solution.

In the method for producing the filter material for an air filter according to the present invention, the mesh-like network is preferably composed of a nanofiber. It is possible to achieve both high particle collection performance and low pressure loss.

In the method for producing the filter material for an air filter according to the present invention, the nanofiber is preferably a nanofiber having a number average fiber diameter of 10 to 500 nm. It is possible to achieve both higher particle collection performance and low pressure loss.

In the method for producing the filter material for an air filter according to the present invention, the polyvinyl alcohol contained in the polyvinyl alcohol aqueous solution preferably has a polymerization degree of 1500 to 6000. The mesh-like network of polyvinyl alcohol can be more reliably formed, and PF value can be improved.

Furthermore, in the method for producing the filter material for an air filter according to the present invention, the polyvinyl alcohol contained in the polyvinyl alcohol aqueous solution preferably has a saponification degree of 80 to 98 mol%. This polyvinyl alcohol is easily dissolved in an aqueous solution, the mesh-like network of polyvinyl alcohol can be more reliably formed, and the PF value can be improved.

In the method for producing the filter material for an air filter according to the present invention, a solid content concentration of polyvinyl alcohol in the polyvinyl alcohol aqueous solution is preferably 0.01 to 0.20 mass%. It is possible to suppress formation of a polyvinyl alcohol film-like structure on the surface of the support.

In the method for producing the filter material for an air filter according to the present invention, the adhesion amount of polyvinyl alcohol to the support, after the drying step, is preferably 0.05 to 1.00 mass%. The filter material for an air filter having high particle collection performance and a relatively low pressure loss can be obtained.

In the method for producing the filter material for an air filter according to the present invention, the amount of the polyvinyl alcohol aqueous solution to adhere to the support is preferably 50 g or more per 1 $m^2$ of the support. The mesh-like network is easily formed, without excess or deficiency, in the pore serving as the fluid permeation path of the support, and the PF value is easily increased.

In the method for producing the filter material for an air filter according to the present invention, in the drying step, the evaporation rate of the solvent of the polyvinyl alcohol aqueous solution adhering to the support in the wet state is preferably 100 g/min or more per 1 $m^2$ of the support. By rapidly drying the polyvinyl alcohol aqueous solution, the mesh-like network of polyvinyl alcohol can be more reliably formed.

In the method for producing the filter material for an air filter according to the present invention, the polyvinyl alcohol aqueous solution preferably further contains a cationic surfactant. It is possible to achieve both high particle collection performance and low pressure loss.

In the method for producing the filter material for an air filter according to the present invention, it is preferable that the cationic surfactant in the polyvinyl alcohol aqueous solution is added in an amount of 1 to 30 parts by mass based on 100 parts by mass of polyvinyl alcohol. The filter material for an air filter having higher particle collection performance and a relatively low pressure loss can be obtained.

In the method for producing the filter material for an air filter according to the present invention, the total adhesion amount of the polyvinyl alcohol and the cationic surfactant to the support, after the drying step, is preferably 0.05 to 1.30 mass%. The filter material for an air filter having higher particle collection performance and a relatively low pressure loss can be obtained.

In the method for producing the filter material for an air filter according to the present invention, the support is preferably a nonwoven fabric, for a filter material, containing glass fiber as a main component. A filter performance can be stably maintained.

A filter material for an air filter according to the present invention includes: a support having fluid permeability; and a mesh-like network of polyvinyl alcohol formed in a pore serving as a fluid permeation path of the support, wherein the mesh-like network is formed of a nanofiber, a polymerization degree of the polyvinyl alcohol is 1500 to 6000, a saponification degree of the polyvinyl alcohol is 80 to 98 mol%, an adhesion amount of the polyvinyl alcohol to the support is 0.05 to 1.00 mass%, and no other binder resins than the polyvinyl alcohol are contained.

A filter material for an air filter according to the present invention includes: a support having fluid permeability; and a mesh-like network of polyvinyl alcohol formed in a pore serving as a fluid permeation path of the support, wherein no other binder resins than the polyvinyl alcohol are contained, a cationic surfactant is included, and the mesh-like network is composed of a nanofiber.

The filter material for an air filter according to the present invention preferably further includes a cationic surfactant. It is possible to provide the filter material for an air filter having improved filter performance, particularly particle collection performance.

Advantageous Effects of Invention

According to the present disclosure, it is practicable to provide the filter material for an air filter having filter performance, particularly particle collection performance, improved by using polyvinyl alcohol and providing the mesh-like network of polyvinyl alcohol, in a pore of a fluid permeation path of a support, relatively randomly in a plane direction and a thickness direction of the support. Furthermore, according to the present disclosure, it is practicable to provide a method for producing this filter material for an air filter in a relatively short time.

Brief Description of Drawings

Fig. 1 is an image obtained by observing an air filter of Example 1A with a SEM (observation magnification:5000 times).
Fig. 2 is an image obtained by observing an air filter of Example 6A with a SEM (observation magnification:5000 times).
Fig. 3 is an image obtained by observing an air filter of Example 8A with a SEM (observation magnification:5000 times).
Fig. 4 is an image obtained by observing an air filter of Comparative Example 2A with a SEM (observation magnification:5000 times).
Fig. 5 is an image obtained by observing an air filter of Example 2B with a SEM (observation magnification:5000 times).
Fig. 6 is an image obtained by observing an air filter of Example 12B with a SEM (observation magnification:5000 times).

Description of Embodiments

Next, the present invention will be described in detail with reference to embodiments, but the present invention is not construed as being limited to these descriptions. The embodiments may be variously modified as long as the effect of the present invention is exhibited.

A method for producing the filter material for an air filter according to the present embodiments include: an adhering step of getting a polyvinyl alcohol aqueous solution adhering to a support, having fluid permeability, to bring the support into a wet state; and a drying step of drying the polyvinyl alcohol aqueous solution adhering to the support in the wet state at 140°C or higher, in which the polyvinyl alcohol aqueous solution contains no other binder resins than polyvinyl alcohol, and the support, after the drying step, has a mesh-like network of polyvinyl alcohol, in a pore serving as a fluid permeation path, by drying the polyvinyl alcohol aqueous solution.

The method for producing the filter material for an air filter according to the present embodiments include a mode in which the polyvinyl alcohol aqueous solution further contains a cationic surfactant.

Hereinafter, the polyvinyl alcohol aqueous solution containing a cationic surfactant is also simply referred to as "polyvinyl alcohol aqueous solution".

< Support >

The support is not particularly limited as long as it has fluid permeability, and for example, a porous material such as a nonwoven fabric, a woven fabric, paper, or a sponge can be used. Among them, the nonwoven fabric is preferable, and in particular, the nonwoven fabric, for a filter material, containing fibers, as main components, such as glass fibers and organic fibers is preferable. The nonwoven fabric, for the filter material, containing glass fibers as main components is more preferable in that filter performance is stably maintained. The phrase "glass fibers and organic fibers as main components" means that the mass of those fibers with respect to the total mass of the support is 50 mass% or more. The content is more preferably 80 mass% or more. When the support is the nonwoven fabric containing the fibers as main components, the mass per unit area is preferably 10 to 300 g/m$^2$, and more preferably 30 to 200 g/m$^2$. The fluid permeability refers to a permeating ability of gas at a minimum, and more preferably a permeating ability of gas and liquid.

The pressure loss of the support is preferably 1 Pa to 500 Pa. The pressure loss of the support is more preferably 10 Pa to 300 Pa, still more preferably 30 Pa to 200 Pa.

When the pressure loss of the support is less than 1 Pa, due to too large pore diameter of the support, it is difficult to stretch the network of polyvinyl alcohol, and difficult to contribute to an increase in collection efficiency, and the PF value may not increase. When the pressure loss of the support is more than 500 Pa, the collection efficiency of the support itself is extremely high, the network of polyvinyl alcohol hardly contributes to the collection efficiency of the support, and the PF value may not increase.

The glass fiber used for the support is, for example, a wool-like ultrafine glass fiber produced by a flame drawing method or a rotary method, or a chopped strand glass fiber produced by cutting a bundle of glass fibers spun, having a predetermined fiber diameter, into a predetermined fiber length. Among them, those having various fiber diameters and fiber lengths are selected depending on required physical properties, and used alone or in combination. For example, a nonwoven fabric formed of glass fibers obtained by mixing two or more kinds of ultrafine glass fibers, having different average fiber diameters, with chopped strand glass fibers is preferable. Low boron glass fibers or silica glass fibers can also be used for the purpose of preventing boron contamination of silicon wafers in semiconductor manufacturing process applications. The average fiber diameter of the glass fiber is not particularly limited, but is preferably 0.05 to 20 um. The average fiber diameter is more preferably 0.1 to 5 um. The average fiber length of the glass fiber is not particularly limited, but is preferably 0.5 to 10000 um. The average fiber diameter is more preferably 1 to 1000 um. On the other hand, the organic fiber is, for example, a polypropylene fiber, an acrylic fiber, a vinylon fiber, a cellulose fiber, a polyester fiber, or an aramid fiber. The average fiber diameter of the organic fiber is not particularly limited, but is preferably 0.05 to 100 um. The average fiber diameter is more preferably 0.1 to 50 um. The average fiber length of the organic fiber is not particularly limited, but is preferably 0.5 to 10000 um when the organic fiber is a short fiber. The average fiber length is more preferably 10 to 5000 um. The method for producing the nonwoven fabric is not particularly limited, and is, for example, a dry method or a wet method.

The shape of the support is not particularly limited, and may not have a planar structure like a sheet. For example, the material of the support may be three-dimensionally processed, like pleated, for forming a zigzag-shaped fold line in which mountain folds and valley folds are repeated. When a long support pleated in advance is used, the support can be dried in a drying region having a limited volume, and the filter material, for an air filter, to which polyvinyl alcohol efficiently adheres can be obtained.

The average pore size of the support is preferably 0.1 to 50 um. The average pore size is more preferably 0.5 to 10 um. When the thickness is less than 0.1 um, the support may be poor in fluid permeability. When the thickness is more than 50 μm, it may be difficult to uniformly form a network structure of polyvinyl alcohol in the pore of the support. In the present embodiments, an aqueous solution containing polyvinyl alcohol and water can be deposited in the pore of the support and then dried to form an air filter. By using the support having an appropriate average pore diameter, the aqueous solution is uniformly distributed in the pore diameter, and the mesh-like structure is easily maintained even after drying. Here, the average pore size can be measured in accordance with ASTM E1294-89 "Half-dry method".

The support itself is preferably a material that can be used as the filter material for an air filter. In the method for producing an air filter according to the present embodiments, by using such a support, it is easy to obtain an air filter having higher particle collection performance than a conventional filter material for an air filter (the support itself). Further, the support may be in a wet state, and for example, a polyvinyl alcohol solution may adhere to the support in the wet state in the middle of papermaking process.

Polyvinyl alcohol is produced by preparing polyvinyl acetate as a raw material and saponifying a carboxyl group of polyvinyl acetate, that is, converting the carboxyl group into a hydroxyl group by alkaline hydrolysis. Here, the proportion of carboxyl groups converted into hydroxyl groups is particularly referred to as a degree of saponification.

The degree of saponification of polyvinyl alcohol is preferably 80 to 98 mol%, more preferably 82 to 90 mol%. When the degree of saponification of polyvinyl alcohol is less than 80 mol%, polyvinyl alcohol is not completely dissolved, and a suitable PF value may not be obtained. When the degree of saponification of polyvinyl alcohol is more than 98 mol%, the degree of saponification becomes high and the hydrophobic effect weakens, so that it may be difficult to form a network.

The polymerization degree of polyvinyl alcohol is preferably 1500 to 6000. It is more preferably 2000 or more and 5000 or less. For example, PVA 95-88 (saponification degree 88 mol%, polymerization degree 3500, manufactured by Kuraray Co., Ltd.) is exemplified. When the polymerization degree of polyvinyl alcohol is less than 1500, a network structure of polyvinyl alcohol is hardly formed, and the PF value may not be increased. When the polymerization degree of polyvinyl alcohol is more than 6000, polyvinyl alcohol is hardly dissolved. Therefore, an undissolved and remained portion may prevent the PF value from increasing.

In the present embodiments, the degree of saponification of polyvinyl alcohol is preferably 80 to 98 mol%, and the degree of polymerization of polyvinyl alcohol is preferably 1500 to 6000. By setting the degree of saponification and the degree of polymerization of polyvinyl alcohol within these ranges, a mesh-like network of polyvinyl alcohol is more easily formed, and the PF value is improved.

In the present embodiments, the polyvinyl alcohol aqueous solution may contain an additive other than polyvinyl alcohol. Examples of the additive include a surfactant, a water repellent, an antifoaming agent, fine fibers, and fine particles and the like. However, the polyvinyl alcohol aqueous solution requires keeping free of any binder resins other than polyvinyl alcohol. When the polyvinyl alcohol aqueous solution contains a binder resin other than polyvinyl alcohol, the PF value of the obtained filter material for an air filter is not improved as compared with the measured PF value of the support only. This is because formation of the mesh-like network of polyvinyl alcohol is inhibited.

In the present embodiments, the polyvinyl alcohol aqueous solution preferably contains a cationic surfactant as an additive other than polyvinyl alcohol. When a mode in which a polyvinyl alcohol aqueous solution containing a cationic surfactant is used is compared with a mode in which a polyvinyl alcohol aqueous solution not containing a cationic surfactant is used, the PF value is further improved in the form containing a cationic surfactant. Even when an anionic surfactant or an amphoteric surfactant is contained in a polyvinyl alcohol aqueous solution, the PF value is not improved, and thus the PF value is further improved by blending a cationic surfactant.

The cationic surfactant is roughly classified into a quaternary ammonium salt type and an amine salt type, and a quaternary ammonium salt type is preferable, and examples thereof include alkyltrimethylammonium chloride, dialkyldimethylammonium chloride, and perfluoroalkyl trialkyl ammonium salt. Further, the perfluoroalkyl trialkyl ammonium salt is a fluorine-based cationic surfactant. Examples of the amine salt type include a monoalkylamine salt, a dialkylamine salt, and a trialkylamine salt.

The cationic surfactant in the polyvinyl alcohol aqueous solution is preferably added in an amount of 1 to 30 parts by mass based on 100 parts by mass of polyvinyl alcohol. When the cationic surfactant is a perfluoroalkyl trialkyl ammonium salt, it is preferably added in an amount of 1 to 30 parts by mass, and more preferably added in an amount of 15 to 30 parts by mass, based on 100 parts by mass of polyvinyl alcohol. When the cationic surfactant is alkyltrimethylammonium chloride, it is preferable that 5 to 10 parts by mass of the cationic surfactant is added based on 100 parts by mass of polyvinyl alcohol.

In the filter material for an air filter obtained by the production method according to the present embodiments, it is preferable that the fibers of polyvinyl alcohol is intertwined in the pore of the support to form voids between the fibers of polyvinyl alcohol, and it is preferable that the filter material for an air filter does not have a film-like structure in which polyvinyl alcohol is laminated. An increase in the pressure loss can be prevented, and the particle penetration can be lowered. The film-shaped structure in which polyvinyl alcohol is laminated refers to a film-shaped object formed by physical entanglement, chemical aggregation, or the like of polyvinyl alcohol and shutting the entire or a part of the pore of the support.

In the present embodiments, the ratio of the adhesion amount of polyvinyl alcohol to the support is preferably 0.05 to 1.00 mass%. The ratio is more preferably 0.10 to 0.50 mass%. By setting this adhesion amount, an air filter having high particle collection performance and a relatively low pressure loss can be obtained. When the ratio of the adhesion amount of polyvinyl alcohol to the support is less than 0.05 mass%, the particle collecting performance may be poor. On the other hand, when the ratio of the adhesion amount of polyvinyl alcohol to the support is more than 1.00 mass%, a film shape that closes the pore of the support is likely to be formed, which may affect particle collection performance and may deteriorate filter performance. The adhesion amount of polyvinyl alcohol to the support can be mainly controlled by the concentration of polyvinyl alcohol in the aqueous solution and the amount of the aqueous solution to adhere to the support, and the adhesion amount of polyvinyl alcohol to the support increases as the concentration of polyvinyl alcohol in the aqueous solution increases or the amount of the aqueous solution to adhere to the support increases.

In the present embodiments, the ratio of the total adhesion amount of polyvinyl alcohol and cationic surfactant to the support is preferably 0.05 to 1.30 mass%. The content is more preferably 0.10 to 0.65 mass%.

In the present embodiment, the amount of the polyvinyl alcohol aqueous solution to adhere to the support is preferably 50 g or more per 1 $m^2$. It is more preferably 100 g or more. When the amount is less than 50 g, the mesh-like network is hardly formed between fibers of the support, and the PF value may be hardly increased. The upper limit of the amount of the polyvinyl alcohol aqueous solution to adhere to the support is, for example, 300 g per 1 $m^2$.

In the present embodiments, after the polyvinyl alcohol aqueous solution adheres to the support, by performing a drying step of drying the polyvinyl alcohol aqueous solution at 140°C or higher, the filter material for an air filter is obtained. The aqueous solution can be obtained by dissolving polyvinyl alcohol in water. The form of the polyvinyl alcohol in the aqueous solution is, for example, a form in which polyvinyl alcohol is stably dissolved in the aqueous solution in units of one molecule or several molecules, or a form in which polyvinyl alcohol is partially aggregated. Among these, the form of the polyvinyl alcohol in the aqueous solution is preferably a form in which polyvinyl alcohol is stably dissolved in the aqueous solution in units of one or several.

< Solvent >

The solvent contained in the polyvinyl alcohol aqueous solution is preferably water or a mixture of water and an organic solvent. Water is more preferable.

< Polyvinyl alcohol aqueous solution >

In the present embodiments, the solid content concentration of polyvinyl alcohol in the aqueous solution is preferably 0.01 to 0.20 mass%. The concentration is more preferably 0.03 to 0.10 mass%. When the solid content concentration of polyvinyl alcohol in the aqueous solution is less than 0.01 mass%, the solid content concentration is too low, so that a network of polyvinyl alcohol is hardly formed, and the PF value may not be increased. When the solid content concentration of polyvinyl alcohol in the aqueous solution is more than 0.20 mass%, a polyvinyl alcohol film-like structure may be formed on the surface of the support. As described above, 1 to 30 parts by mass of the cationic surfactant is added to the polyvinyl alcohol aqueous solution based on 100 parts by mass of polyvinyl alcohol.

< Preparation of aqueous solution >

In the present embodiments, the method for preparing the aqueous solution is not particularly limited, and by dissolving the above-described polyvinyl alcohol in water, the aqueous solution may be prepared. As a method for adding a cationic surfactant to a polyvinyl alcohol aqueous solution, for finally adjusting the concentration of polyvinyl alcohol after adding polyvinyl alcohol to water, dilution is performed using an aqueous solution containing the cationic surfactant at a concentration of about 0.5 to 3 mass%, and the concentrations of polyvinyl alcohol and the cationic surfactant are adjusted.

The method for dissolving polyvinyl alcohol according to the present embodiments is not particularly limited, but for example, a powder or solution of polyvinyl alcohol is charged into water and stirred at about 100 to 700 rpm for 10 minutes, using a magnetic stirrer, a propeller-type stirrer, or the like. Next, the temperature is set to 95°C during stirring, and stirring is performed for about 2 hours to completely dissolve the compound.

< Adhering Step >

The method for getting the aqueous solution adhering to the support is, for example, an impregnation method, a coating method, or a spraying method. The method is preferably a spraying method. The amount of the aqueous solution to adhere to the support is appropriately adjusted dependently on the thickness, material, and average pore diameter of the support, but as described above, in the present embodiments, the adhesion amount of polyvinyl alcohol to the support is preferably 0.05% to 1.00%. When the adhesion amount of polyvinyl alcohol to the support is less than 0.05 mass%, the adhesion amount of polyvinyl alcohol to the support is insufficient, and it is difficult to form a uniform polyvinyl alcohol network. As a result, a particle collecting performance as the filter material for an air filter may not be sufficiently improved. On the other hand, when the content is more than 1.00 mass%, the mesh-like network of polyvinyl alcohol is likely to be aggregated to form a film, and the particle collecting performance may not be sufficiently improved. As described above, in the present embodiments, the ratio of the total adhesion amount of the polyvinyl alcohol and the cationic surfactant to the support is preferably 0.05 to 1.30 mass%. In the present embodiments, the method for calculating the ratio of the adhesion amount of polyvinyl alcohol to the support is not particularly limited, but for example, when the support is composed of only inorganic fibers, the ratio can be calculated from the weight reduction ratio after the combustion in which only polyvinyl alcohol is combusted, or when a cationic surfactant is contained, the ratio can be calculated from the weight reduction ratio after the combustion in which polyvinyl alcohol and a cationic surfactant is combusted. The ratio of the adhesion amount of polyvinyl alcohol to the support may be obtained by conversion from wet adhesion amount. That is, the ratio (unit: %) of the adhesion amount of polyvinyl alcohol to the support is {(Wet adhesion amount × solid content concentration of polyvinyl alcohol in aqueous solution) /mass of the support before adhesion of aqueous solution} × 100. The ratio of the adhesion amount of the polyvinyl alcohol and the cationic surfactant to the support may be obtained by conversion from the wet adhesion amount. That is, the proportion (unit: %) of the amounts of polyvinyl alcohol and the cationic surfactant adhering to the support is {(Wet adhesion amount × total solid content concentration of polyvinyl alcohol and cationic surfactant in aqueous solution) /mass of the support before adhesion of aqueous solution} × 100. Here, the wet adhesion amount is a difference between the mass of the support in a wet state to which the aqueous solution adheres and the mass of the support before adhesion, and means the mass of the aqueous solution adhering to the support at the start of the drying step. Therefore, the wet adhesion amount is preferably a value measured immediately before the drying step, and for example, the wet adhesion amount is preferably measured within a remaining time of 10 minutes until the drying step starts, and more preferably measured within a remaining time of 5 minutes.

The impregnation method includes, for example, a method of completely immersing the support in an aqueous solution or a method of immersing only the surface of the support. The method of completely immersing the support in the aqueous solution is excellent, in that a more uniform polyvinyl alcohol network can be formed, because the aqueous solution can efficiently and certainly penetrate to the deep part in the pore of the support. In addition, when the support, completely immersed in the aqueous solution, is decompressed, the air in the support easily escapes, so that it is more effective for allowing the aqueous solution to permeate. The excessively adhering aqueous solution is preferably squeezed out with a roll dehydrator or the like, or removed with a water absorbing member such as a water absorbing felt or a water absorbing paper. The method of immersing only the surface of the support is effective when a density difference of the network structure of polyvinyl alcohol in the pore (The existence ratio of the network structure of polyvinyl alcohol is different between one surface side and the other surface of the support.) is provided in the thickness direction of the support.

The coating method is a method of applying an aqueous solution to a surface of the support using a known coating machine or brush. The known coating machine is, for example, a curtain coater or a die coater. The coating method is excellent in that the amount of the aqueous solution to adhere to the support is easily controlled.

The spraying method is a method of spraying an aqueous solution onto the surface of the support using a known atomizing device such as an atomizer or a spray. The spraying method is effective, for example, when it is desired to form a network structure of polyvinyl alcohol only in the pore in the vicinity of the surface of the support, or when it is not desired to bring a large amount of impregnation liquid or a roll or a bar of a coating machine into contact with the support.

In the present embodiments, a spraying method is more preferable. In the impregnation method, although there is an advantage in liquid permeation, upon wiping off the excessively adhering solution, for example, the solution adhering between the glass fibers is wiped off, and the mesh-like network is hardly formed after drying. In addition, if dehydration is performed by a suction machine or the like instead of wiping, a film of solution disappears between fibers, a network is not formed, and filter performance does not increase. On the other hand, in the spray method, since it is possible to control the adhesion amount of the solution, it is not necessary to get the excessive solution adhering, and the filter performance can be stably increased.

< Drying step >

In the present embodiments, the aqueous solution adheres to the support as described above, the support is brought into a wet state, and then the support is dried at 140°C or higher. The temperature is preferably 140 to 250°C, and more preferably 170 to 220°C. The drying temperature here refers to the maximum drying temperature of a drying device in the drying process.

In the present embodiments, a drum-type heat dryer, a hot air dryer, an infrared dryer, or the like is preferable as a drying equipment. These drying methods may be combined. The drying here is performed at normal pressure.

In the present embodiments, in the drying step, the evaporation rate of the solvent of the polyvinyl alcohol aqueous solution adhering to the support in the wet state is preferably 100 g/min or more per 1 $m^2$ of the support. More preferably, it is 120 g/min or more. When it is less than 100 g/min, due to slow drying speed, the mesh-like network of polyvinyl alcohol cannot be formed, depending on the situation. The upper limit of the evaporation rate is, for example, 300 g/min.

In the present embodiments, wind may be used in drying. The purpose of using wind is to prevent evaporated water vapor from remaining around the support and to promote volatilization of the solution. However, when the air is strong so as to penetrate the inside of the filter material, there is a possibility that the film of the solution adhering between the fibers is broken, and thus an appropriate air volume is preferable.

When the cationic surfactant is contained in the polyvinyl alcohol aqueous solution, the amount of the aqueous solution to adhere to the support is reduced as compared with the solution where the cationic surfactant is not contained. When the cationic surfactant is contained, it is presumed that the filterability of water is improved, and as a result, the adhesion amount is reduced. When the amount of the aqueous solution to adhere is reduced, the burden during thermal drying is reduced, the drying time is shortened, and the productivity is improved.

In the present embodiments, the solid polyvinyl alcohol obtained after drying is fibrous, and is preferably a nanofiber, more preferably a nanofiber having a number average fiber diameter of 10 to 500 nm, and still more preferably a nanofiber having a number average fiber diameter of 10 to 100 nm. In order to obtain an air filter that achieves both high particle collection performance and low pressure loss, it is important to form a uniform fiber network of polyvinyl alcohol, having an extremely thin fiber diameter, in the support. When a nanofiber, particularly ultrafine polyvinyl alcohol having a number average fiber diameter of 500 nm or less is used, the number of fibers per unit volume in the filter material for an air filter is significantly increased, particles in a gas are easily captured, and high collection performance can be obtained. In addition, due to slip flow effect, the ventilation resistance of the single fiber is extremely low, and pressure loss as an air filter is less likely to increase. The polyvinyl alcohol number average fiber diameter here is calculated by the following. The watersoluble polymer cast on the carbon film-coated grid is observed by an electron microscope image using a transmission electron microscope (TEM). With respect to the obtained observation image, two random axes per image, i.e., a vertical axis and a horizontal axis, are drawn and the fiber diameter of the fiber intersecting one or both of the axes is visually observed. Thereat, observation is performed at a chosen magnification of 5,000 times, 10,000 times, or 50,000 times, depending on the size of the constituent fibers. The sample or the magnification is conditioned on 20 or more fibers across one or both of the axes. In this way, images of at least three non-overlapped surface portions are photographed with the electron microscope, and the value of the fiber diameter of the fiber intersecting each of the two axes is read. Therefore, at least 20 pieces $\times$ 2 $\times$ 3 = 120 pieces of fiber information are obtained. The number average fiber diameter is calculated from the thus obtained fiber diameter data. When the length of the branched portion is 50 nm or more, the branched fiber is subjected to the calculation of the fiber diameter as one fiber. The number average fiber diameter may be calculated according to the following. The polyvinyl alcohol present on the surface or inside of the support is observed by an electron microscope image using a scanning electron microscope (SEM). With respect to the obtained observation image, two random axes per image, i.e., a vertical axis and horizontal axis, are drawn and a fiber diameter of the fiber intersecting one or both of the axes is visually observed. Thereat, observation is performed at one magnification of 5000 to 50000 times, depending on the size of the constituent fibers. Images of a plurality of non-overlapping surface portions are photographed with an electron microscope, and the value of the fiber diameter of the fiber intersecting each of the two axes is read. The number average fiber diameter is calculated from at least 120 pieces of fiber diameter data. When the length of the branched portion is 50 nm or more, the branched fiber is subjected to the calculation of the fiber diameter as one fiber. In order to obtain an observation image of the sample without distortion, conductive coating is performed in advance, or influence of the coating film thickness is also considered. For example, in using an ion sputtering (E-1045, manufactured by Hitachi High-Technologies Corporation), when the discharge current is 15 mA, the sample-target distance is 30 mm, the degree of vacuum is 6 Pa, and the coating time is 2 minutes, the coating film thickness is 12 nm. However, in measuring the fiber diameter, the deposition direction of the coating film is perpendicular to the assumed direction, and thus, in measuring the fiber diameter, the coating film thickness is half the assumed thickness. That is, when coating is performed under the above conditions, a coating film thickness of 12 nm (6 nm + 6 nm) at both ends is excluded from the fiber diameter obtained from SEM.

The filter material for an air filter obtained by the production method according to the present embodiments preferably includes the support having fluid permeability, and the mesh-like network of polyvinyl alcohol formed in a pore serving as a fluid permeation path of the support, in which the mesh-like network is formed of a nanofiber having a number average fiber diameter of 10 to 500 nm, the polymerization degree of the polyvinyl alcohol is 1500 to 6000, the saponification degree of the polyvinyl alcohol is 80 to 98 mol%, the adhesion amount of the polyvinyl alcohol to the support is 0.05 to 1.00 mass%, and no other binder resins than the polyvinyl alcohol are contained. Here, the filter material for an air filter contains no other binder resins than the polyvinyl alcohol. When the filter material for an air filter further contains a binder resin other than polyvinyl alcohol, the PF value is not improved as compared with the measured PF value of the support only. This is because further containing a binder resin other than polyvinyl alcohol keeps out of forming the mesh-like network of polyvinyl alcohol.

The filter material for an air filter obtained by the production method according to the present embodiments preferably includes the support having fluid permeability, and the mesh-like network of polyvinyl alcohol formed in a pore serving as a fluid permeation path of the support, contains no other binder resins than the polyvinyl alcohol but contains a cationic surfactant, and the mesh-like network is composed of a nanofiber. Here, the cationic surfactant is preferably added in an amount of 1 to 30 parts by mass based on 100 parts by mass of polyvinyl alcohol. Here, the filter material for an air filter contains no other binder resins than the polyvinyl alcohol. When the filter material for an air filter further contains a binder resin other than polyvinyl alcohol, the PF value is not improved as compared with the measured PF value of the support only. This is because further containing a binder resin other than polyvinyl alcohol keeps out of forming the mesh-like network of polyvinyl alcohol. In addition, by containing the cationic surfactant, the PF value is further increased as compared with the value obtained by containing no cationic surfactants. In the filter material for an air filter obtained by the production method according to the present embodiments, the total adhesion amount of the polyvinyl alcohol and the cationic surfactant to the support is preferably 0.05 to 1.30 mass%. The polymerization degree of polyvinyl alcohol is preferably 1500 to 6000. Furthermore, the degree of saponification of polyvinyl alcohol is preferably 60 to 90 mol%. Furthermore, the nanofiber is preferably a nanofiber having a number average fiber diameter of 10 to 500 nm.

The PF value of the filter material for an air filter obtained by the production method according to the present embodiments is preferably higher by 0.5 or more than the PF value of the support under the conditions of a surface wind speed of 5.3 cm/sec and a target particle of 0.10 to 0.15 um. The PF value is an index for evaluating the superiority and inferiority of the balance between the pressure loss and the particle collection performance, and is calculated using the formula shown in Formula 1. The higher the PF value is, the lower particle penetration of the target particle and the lower pressure loss the filter material for an air filter has.

[Formula 1]

$$\text{PF value} = \frac{\log_{10}(\text{PAO penetration}[\%]/100)}{\text{Pressure loss}[\text{Pa}]/9.81} \times (-100)$$

In Formula 1, the pressure loss is measured using, for example, a manometer. In addition, the particle penetration is the ratio at which a polydisperse polyalphaolefin (PAO) particle, generated by a Laskin nozzle, penetrates the air filter or the filter material for an air filter upon passing air containing the PAO particle therethrough. The particle penetration is measured using, for example, a laser particle counter.

The PF value of the filter material for an air filter is also affected by the type and configuration of the support, but is greatly affected by the packing density of polyvinyl alcohol or the degree of formation of a network by polyvinyl alcohol. In the filter material for an air filter obtained by the production method according to the present embodiments, the concentration of the aqueous solution of polyvinyl alcohol to adhere to the support is preferably 0.01 to 0.20 mass%, but even with such an concentration to adhere, for example, adhering of polyvinyl alcohol convergently distributed inside and/or on the surface of the pore of the support, and the partially excessively increased packing density of polyvinyl alcohol causes an excessive increase in pressure loss, and as a result, the PF value decreases. The filter material for an air filter preferably has the mesh-like network of polyvinyl alcohol inside and/or on the surface of the support and does not have a polyvinyl alcohol film-like structure. Regarding the polyvinyl alcohol film-like structure, more specifically, when an aqueous solution having a high concentration of polyvinyl alcohol adheres to the support, it is conceivable that adhering the polyvinyl alcohol is convergently distributed on the inside and/or surface of the pore of the support, and polyvinyl alcohol molecules are laminated inside and/or on the surface of the pore of the support to form a film. As a result, the mesh-like network of polyvinyl alcohol is not formed on the surface layer of the support, and a film-like structure may be generated. When the filter material for an air filter in which this film-like structure is partially generated is used, an increase in pressure loss and a decrease in particle collection performance (that is, a decrease in PF value) occur, and, depending on the situation, air permeability as an air filter cannot be maintained. Even when adhering polyvinyl alcohol is convergently distributed only in the vicinity of the surface layer of the support, the appropriately formed network of polyvinyl alcohol (not excessively high packing density of polyvinyl alcohol) does not increase the pressure loss so much, and a PF value suitable for an air filter can be obtained. In the present embodiments, as a form "including the mesh-like network of polyvinyl alcohol in a pore serving as a fluid permeation path", for example, there are three forms in which a network structure formed by entangling a nanofiber composed of polyvinyl alcohol in a mesh-like exists inside, on a surface, or both inside and on a surface of the pore serving as the fluid permeation path. When the filter material for an air filter is produced by containing a cationic surfactant in a polyvinyl alcohol aqueous solution, the formation of the mesh-like network of polyvinyl alcohol is further optimized, and the PF value is further increased.

## Examples

Next, the present invention will be described more specifically with reference to Examples, but the present invention is not limited to these Examples. In the examples, "part" and "%" represent "part by mass" and "mass%", respectively, unless otherwise specified. The number of parts added is a value obtained by conversion from solid content.

[Step of preparing polyvinyl alcohol aqueous solution]

Into a 1000 ml beaker, 998.0 g of water was put, and then into the beaker, 2.0 g of a polyvinyl alcohol (saponification degree 88 mol%, polymerization degree 3500) powder was put, and the resulting mixture was stirred for 10 minutes by a propeller-type stirrer. Then, the temperature was set to 95°C during stirring, and the mixture was stirred for 2 hours for dissolution. The solid content concentration of polyvinyl alcohol with respect to the total mass of the aqueous solution was 0.20%, and the aqueous solution was diluted with water so as to have each concentration of Examples and Comparative Examples. All the water used for adjusting the aqueous solution is distilled water.

### Test A: Examination of form not containing cationic surfactant

(Example 1A)

[Adhesion/drying of polyvinyl alcohol]

The aqueous solution of polyvinyl alcohol having a degree of saponification of 88 mol% and a degree of polymerization of 3500 was used to have an aqueous solution concentration of 0.07%, an aqueous solution of polyvinyl alcohol adhered to a nonwoven fabric (hereinafter, referred to as a "support") composed of glass fibers (22 parts of ultrafine glass fibers having an average fiber diameter of 0.65 um, 63 parts of ultrafine glass fibers having an average fiber diameter of 2.4 μm, and 15 parts of chopped glass fibers having an average fiber diameter of 6 μm.) having a mass per unit area of 51 g/m$^2$ and a pressure loss of about 70 Pa as a support in an amount shown in Table 1 by two-fluid nozzle spray spraying, and the nonwoven fabric was dried at 190°C in a hot air dryer to obtain a filter material for an air filter. The adhesion amount of polyvinyl alcohol to the support was 0.31%.

(Example 2A)

The filter material for an air filter was obtained in the same manner as in Example 1A except that the drying temperature was changed to 170°C and the amount of the polyvinyl alcohol aqueous solution to adhere was changed to the amount shown in Table 1. The adhesion amount of polyvinyl alcohol to the support was 0.30%.

(Example 3A)

The filter material for an air filter was obtained in the same manner as in Example 1A except that the drying temperature was changed to 150°C and the amount of the polyvinyl alcohol aqueous solution to adhere was changed to the amount shown in Table 1. The adhesion amount of polyvinyl alcohol to the support was 0.29%.

(Example 4A)

The filter material for an air filter was obtained in the same manner as in Example 1A except that the dryer was changed to a drum-type heat dryer, the drying temperature was changed to 150°C, and the amount of the polyvinyl alcohol aqueous solution to adhere was changed to the amount shown in Table 1. The adhesion amount of polyvinyl alcohol to the support was 0.20%.

(Example 5A)

The filter material for an air filter was obtained in the same manner as in Example 1A except that the dryer was changed to a drum-type heat dryer, the drying temperature was changed to 180°C, and the amount of the polyvinyl alcohol aqueous solution to adhere was changed to the amount shown in Table 1. The adhesion amount of polyvinyl alcohol to the support was 0.34%.

(Example 6A)

The filter material for an air filter was obtained in the same manner as in Example 1A except that the saponification degree of polyvinyl alcohol was changed to 88 mol% and a polymerization degree of polyvinyl alcohol was changed to 4500 and the amount of the aqueous solution of polyvinyl alcohol to adhere was changed to the amount shown in Table 1. The adhesion amount of polyvinyl alcohol to the support was 0.37%.

(Example 7A)

The filter material for an air filter was obtained in the same manner as in Example 1A except that the saponification degree was changed to 98 mol%, the polymerization degree was changed to 1700, and the amount of the aqueous solution of polyvinyl alcohol to adhere was changed to the amount shown in Table 1. The adhesion amount of polyvinyl alcohol to the support was 0.31%.

(Example 8A)

The filter material for an air filter was obtained in the same manner as in Example 1A except that the saponification degree was changed to 98 mol%, the polymerization degree was changed to 2400, and the amount of the aqueous solution of polyvinyl alcohol to adhere was changed to the amount shown in Table 2. The adhesion amount of polyvinyl alcohol to the support was 0.31%.

(Example 9A)

The filter material for an air filter was obtained in the same manner as in Example 1A except that the saponification degree was changed to 80 mol%, the polymerization degree was changed to 2400, and the amount of the aqueous solution of polyvinyl alcohol to adhere was changed to the amount shown in Table 2. The adhesion amount of polyvinyl alcohol to the support was 0.36%.

(Example 10 A)

The filter material for an air filter was obtained in the same manner as in Example 1A except that the concentration of the aqueous solution was changed to 0.20% and the amount of the polyvinyl alcohol aqueous solution to adhere was changed to the amount shown in Table 2. The adhesion amount of polyvinyl alcohol to the support was 0.44%.

(Example 11 A)

The filter material for an air filter was obtained in the same manner as in Example 1A except that the concentration of the aqueous solution was changed to 0.25% and the amount of the polyvinyl alcohol aqueous solution to adhere was changed to the amount shown in Table 2. The adhesion amount of polyvinyl alcohol to the support was 0.50%.

(Comparative Example 1A)

The untreated "support" composed of glass fiber of Example 1A was directly used as an air filter material.

(Comparative Example 2A)

The filter material for an air filter was obtained in the same manner as in Example 1A except that the drying temperature was changed to 120°C and the amount of the polyvinyl alcohol aqueous solution to adhere was changed to the amount shown in Table 2. The adhesion amount of polyvinyl alcohol to the support was 0.31%.

(Comparative Example 3A)

The filter material for an air filter was obtained in the same manner as in Example 1A except that the filter material was dried so that hot air directly pierced through the filter material for an air filter, and the amount of the aqueous solution of polyvinyl alcohol to adhere was changed to the amount shown in Table 2. The adhesion amount of polyvinyl alcohol to the support was 0.31%.

(Comparative Example 4A)

The filter material for an air filter was obtained in the same manner as in Example 1A except that an acrylic resin (trade name: Ultrasol FB-19/manufactured by AICA Kogyo Co., Ltd.) was further added to the aqueous solution of polyvinyl alcohol so as to have a concentration of 0.0007% in the aqueous solution, and the amount of the aqueous solution of polyvinyl alcohol containing the acrylic resin to adhere was changed to the amount shown in Table 3. The total adhesion amount of the polyvinyl alcohol and the acrylic resin to the support was 0.34%.

Preparation conditions and physical property values of the filter material for an air filter obtained in each of Examples and Comparative Examples are shown in Tables 1 to 3. Physical property values were measured by the following methods.

[Table 1]

| | SOLID CONTENT CONCENTRATION OF PVA IN AQUEOUS SOLUTION (MASS%) | SAPONIFICATION DEGREE (mol%) | POLYMERIZATION DEGREE | AMOUNT OF PVA AQUEOUS SOLUTION TO ADHERE TO SUPPORT (g/m$^2$) | ADHERING METHOD | DRYER TYPE | DRYING TEMPERATURE (°C) | EVAPORATION RATE OF SOLVENT OF PVA AQUEOUS SOLUTION (g/m$^2$)/MIN | ADHESION AMOUNT OF PVA (%) | NANOFIBER OF PVA IS FORMED OR NOT | NUMBER AVERAGE FIBER DIAMETER OF NANOFIBER (nm) | PRESSURE LOSS (Pa) | 0.10-0.15μm | | PF VALUE | GURLEY STIFFNESS T (mN) | TENSILE STRENGTH (kN/m) |
|---|---|---|---|---|---|---|---|---|---|---|---|---|---|---|---|---|---|
| | | | | | | | | | | | | | COLLECTION EFFICIENCY (%) | PARTICLE PENETRATION (%) | | | |
| EXAMPLE 1A | 0.07 | 88 | 3500 | 246 | SPRAYING METHOD | HOT AIR TYPE | 190 | 171 | 0.31 | FORMED | 40 | 86 | 93.90 | 6.10 | 13.8 | 4.69 | 0.52 |
| EXAMPLE 2A | 0.07 | 88 | 3500 | 253 | SPRAYING METHOD | HOT AIR TYPE | 170 | 137 | 0.30 | FORMED | 70 | 89 | 92.72 | 7.28 | 12.3 | 4.67 | 0.50 |
| EXAMPLE 3A | 0.07 | 88 | 3500 | 245 | SPRAYING METHOD | HOT AIR TYPE | 150 | 121 | 0.29 | FORMED | 100 | 78 | 89.09 | 10.91 | 12.3 | 4.69 | 0.50 |
| EXAMPLE 4A | 0.07 | 88 | 3500 | 153 | SPRAYING METHOD | DRUM TYPE | 150 | 198 | 0.20 | FORMED | 150 | 80 | 88.90 | 11.10 | 11.7 | 4.93 | 0.51 |
| EXAMPLE 5A | 0.07 | 88 | 3500 | 136 | SPRAYING METHOD | DRUM TYPE | 180 | 278 | 0.34 | FORMED | 120 | 73 | 88.36 | 11.64 | 12.7 | 4.87 | 0.48 |

(continued)

| | SOLID CONTENT CONCENTRATION OF PVA IN AQUEOUS SOLUTION (MASS%) | SAPONIFICATION DEGREE (mol%) | POLYMERIZATION DEGREE | AMOUNT OF PVA AQUEOUS SOLUTION TO ADHERE TO SUPPORT (g/m$^2$) | ADHERING METHOD | DRYER TYPE | DRYING TEMPERATURE (°C) | EVAPORATION RATE OF SOLVENT OF PVA AQUEOUS SOLUTION (g/m$^2$)/MIN | ADHESION AMOUNT OF PVA (%) | NANOFIBER OF PVA IS FORMED OR NOT | NUMBER AVERAGE FIBER DIAMETER OF NANOFIBER (nm) | PRESSURE LOSS (Pa) | 0.10-0.15μm | | PF VALUE | GURLEY STIFFNESS T (mN) | TENSILE STRENGTH (kN/m) |
|---|---|---|---|---|---|---|---|---|---|---|---|---|---|---|---|---|---|
| | | | | | | | | | | | | | COLLECTION EFFICIENCY (%) | PARTICLE PENETRATION (%) | | | |
| EXAMPLE 6A | 0.07 | 88 | 4500 | 261 | SPRAYING METHOD | HOT AIR TYPE | 190 | 171 | 0.37 | FORMED | 30 | 82 | 93.51 | 6.49 | 14.7 | 4.63 | 0.46 |
| EXAMPLE 7A | 0.07 | 98 | 1700 | 216 | SPRAYING METHOD | HOT AIR TYPE | 190 | 171 | 0.31 | FORMED | 180 | 68 | 84.23 | 15.77 | 11.6 | 4.88 | 0.52 |

[Table 2]

| | SOLID CONTENT CONCENTRATION OF PVA IN AQUEOUS SOLUTION (MASS%) | SAPONIFICATION DEGREE (mol%) | POLYMERIZATION DEGREE | AMOUNT OF PVA AQUEOUS SOLUTION TO ADHERE TO SUPPORT (g/m$^2$) | ADHERING METHOD | DRYER TYPE | DRYING TEMPERATURE (°C) | EVAPORATION RATE OF SOLVENT OF PVA AQUEOUS SOLUTION (g/m$^2$) /MIN | ADHESION AMOUNT OF PVA (%) | NANOFIBER OF PVA is FORMED OR NOT | NUMBER AVERAGE FIBER DIAMETER OF NANOFIBER (nm) | PRESSURE LOSS (Pa) | 0.10-0.15μm | | PF VALUE | GURLEY STIFFNESS T (mN) | TENSILE STRENGTH (kN/m) |
|---|---|---|---|---|---|---|---|---|---|---|---|---|---|---|---|---|---|
| | | | | | | | | | | | | | COLLECTION EFFICIENCY (%) | PARTICLE PENETRATION (%) | | | |
| EXAMPLE 8A | 0.07 | 98 | 2400 | 222 | SPRAYING METHOD | HOT AIR TYPE | 190 | 171 | 0.31 | FORMED | 140 | 70 | 88.06 | 11.94 | 12.2 | 4.60 | 0.46 |
| EXAMPLE 9A | 0.07 | 80 | 2400 | 258 | SPRAYING METHOD | HOT AIR TYPE | 190 | 171 | 0.36 | FORMED | 250 | 74 | 85.42 | 14.58 | 11.1 | 4.67 | 0.41 |
| EXAMPLE 10A | 0.20 | 88 | 3500 | 111 | SPRAYING METHOD | HOT AIR TYPE | 190 | 171 | 0.44 | FORMED | 200 | 82 | 89.08 | 10.92 | 11.5 | 5.21 | 0.50 |
| EXAMPLE 11A | 0.25 | 88 | 3500 | 110 | SPRAYING METHOD | HOT AIR TYPE | 190 | 171 | 0.50 | FORMED | 300 | 90 | 90.30 | 9.70 | 11.0 | 5.52 | 0.49 |
| COMPARATIVE EXAMPLE 1A | - | - | - | - | - | - | - | - | - | - | N/A | 65 | 81.18 | 18.82 | 10.9 | 3.50 | 0.26 |

(continued)

| | SOLID CONTENT CONCENTRATION OF PVA IN AQUEOUS SOLUTION (MASS%) | SAPONIFICATION DEGREE (mol%) | POLYMERIZATION DEGREE | AMOUNT OF PVA AQUEOUS SOLUTION TO ADHERE TO SUPPORT (g/m$^2$) | ADHERING METHOD | DRYER TYPE | DRYING TEMPERATURE (°C) | EVAPORATION RATE OF SOLVENT OF PVA AQUEOUS SOLUTION (g/m$^2$)/MIN | ADHESION AMOUNT OF PVA (%) | NANOFIBER OF PVA is FORMED OR NOT | NUMBER AVERAGE FIBER DIAMETER OF NANOFIBER (nm) | PRESSURE LOSS (Pa) | 0.10-0.15μm | | PF VALUE | GURLEY STIFFNESS T (mN) | TENSILE STRENGTH (kN/m) |
|---|---|---|---|---|---|---|---|---|---|---|---|---|---|---|---|---|---|
| | | | | | | | | | | | | | COLLECTION EFFICIENCY (%) | PARTICLE PENETRATION (%) | | | |
| COMPARATIVE EXAMPLE 2A | 0.07 | 88 | 3500 | 241 | SPRAYING METHOD | HOT AIR TYPE | 120 | 87 | 0.31 | NOT FORMED | N/A | 71 | 82.24 | 17.76 | 10.3 | 4.22 | 0.45 |
| COMPARATIVE EXAMPLE 3A | 0.07 | 88 | 3500 | 251 | SPRAYING METHOD | HOT AIR PIERCES THROUGH FILTER MATERIAL | 190 | 171 | 0.31 | NOT FORMED | N/A | 70 | 81.15 | 18.85 | 10.1 | 4.35 | 0.45 |

[Table 3]

| | SOLID CONTENT CONCENTRATION OF PVA IN AQUEOUS SOLUTION (MASS%) | SAPONIFICATION DEGREE (mol%) | POLYMERIZATION DEGREE | SOLID CONTENT CONCENTRATION OF ACRYLIC TYPE RESIN IN AQUEOUS SOLUTION (MASS%) | AMOUNT OF AQUEOUS SOLUTION TO ADHERE TO SUPPORT (g/m$^2$) | ADHERING METHOD | DRYER TYPE | DRYING TEMPERATURE (°C) | EVAPORATION RATE OF SOLVENT OF PVA AQUEOUS SOLUTION (g/m$^2$)/MIN | TOTAL ADHESION AMOUNT OF PVA AND ACRYLIC TYPE RESIN (%) | NANOFIBER OF PVA IS FORMED OR NOT | NUMBER AVERAGE FIBER DIAMETER OF NANOFIBER (nm) | PRESSURE LOSS (Pa) | 0.10-0.15μm | | PF VALUE | GURLEY STIFFNESS T (mN) | TENSILE STRENGTH (kN/m) |
|---|---|---|---|---|---|---|---|---|---|---|---|---|---|---|---|---|---|---|
| | | | | | | | | | | | | | | COLLECTION EFFICIENCY (%) | PARTICLE PENETRATION (%) | | | |
| COMPARATIVE EXAMPLE 4A | 0.0700 | 88 | 3500 | 0.0007 | 244 | SPRAYING METHOD | HOT AIR TYPE | 190 | 171 | 0.34 | NOT FORMED | N/A | 68 | 77.08 | 22.92 | 9.2 | 4.80 | 0.50 |

"PF value"

The PF value was calculated from the measured values of the pressure loss and the particle penetration using the formula shown in Formula 1. The target particle size was 0.10 to 0.15 um. The higher the PF value is, the lower the particle penetration of the target particle and the lower the pressure loss the air filter has.

[Formula 1]

$$\text{PF value} = \frac{\log_{10}(\text{PAO penetration}[\%]/100)}{\text{Pressure loss}[\text{Pa}]/9.81} \times (-100)$$

"Observation of Network"

The network was observed by observing the filter material for an air filter with a scanning electron microscope (SU 8010, abbreviated as SEM, manufactured by Hitachi High-Technologies Corporation.) at 5000 to 10000 times magnification. Before the observation, conductive coating was performed using an ion sputter (E-1045, manufactured by Hitachi High-Technologies Corporation.) under the conditions of a discharge current of 15 mA, a sample-target distance of 30 mm, a degree of vacuum of 6 Pa, and a coating time of 2 minutes.

"Gurley stiffness measuring method"

It was measured according to JAPAN TAPPI paper pulp test method No. 40 : 2000, Paper and board-Determination of stiffness-Gurley method. The instrument used was a Gurley Stiffness Tester (manufactured by KUMAGAI RIKI KOGYO Co., Ltd.).

"Tensile strength measuring method"

Measurement was performed according to JIS P8113 : 2006 Paper and board-Determination of tensile properties. The instrument used was an Autograph AGX (manufactured by Shimadzu Corporation).

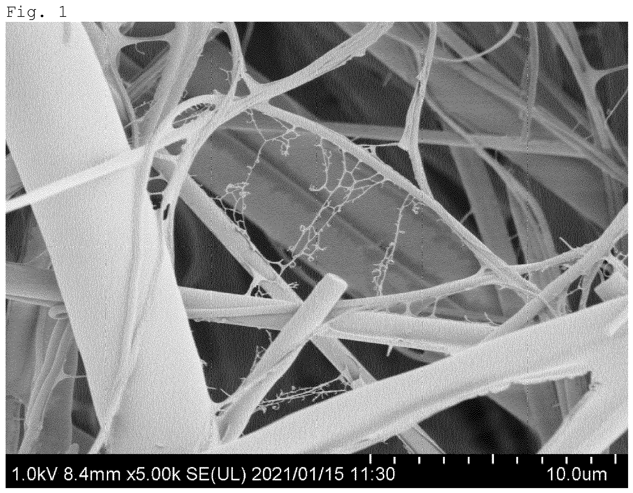

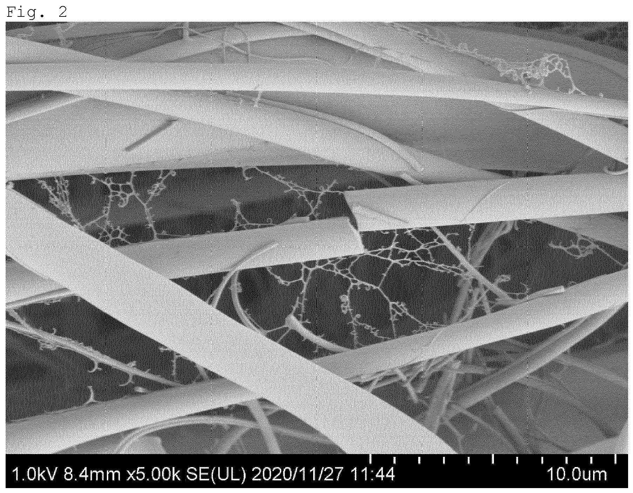

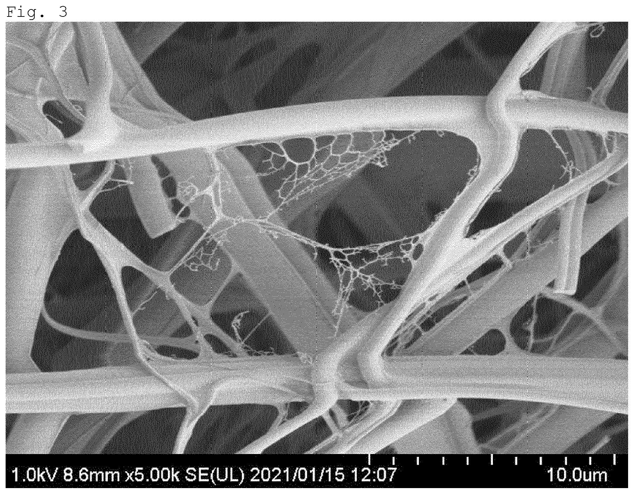

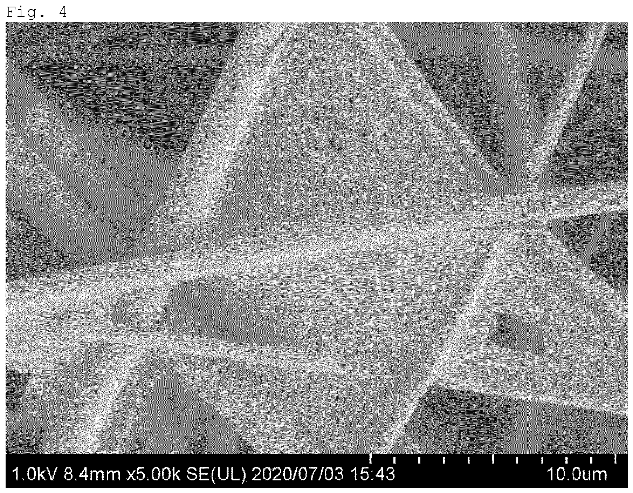

It can be seen that any support of Examples 1A to 11A showed a higher PF value than the support of Comparative Example 1A. Fig. 1 shows an SEM observation image of the air filter of Example 1A. According to Fig. 1, polyvinyl alcohol having a degree of saponification of 88 mol% was dried at high speed at a high temperature of 190 °C, so that a finer nanofiber network was provided, and a suitable PF value could be obtained. Fig. 2 shows an SEM observation image of the air filter of Example 6A. According to Fig. 2, since the polymerization degree was higher than that in Example 1A, it became possible to have a finer nanofiber network, so that the filter material for an air filter having a further increased PF value could be obtained. Fig. 3 shows an SEM observation image of the air filter of Example 8A. According to Fig. 3, a completely saponified polyvinyl alcohol having a degree of saponification of 98 mol% used, whose high degree of polymerization of 2400 produced a fine nanofiber by drying at a high temperature of 190 °C, and could provide a suitable PF value. In Comparative Example 2A, drying was not enough since the drying temperature was lower than 140 °C, a fine mesh-like network was not formed, and the PF value did not increase. Fig. 4 shows an SEM observation image of the air filter of Comparative Example 2A. According to Fig. 4, since drying was not enough, a film-like laminate of polyvinyl alcohol was formed. In Comparative Example 3A, since air was directly applied to the inside of the filter material for an air filter to be dried, the water film of PVA was destroyed by intense air, a mesh-like network was hardly formed, and the PF value did not increase. In Comparative Example 4A, a slight amount of an acrylic resin (1% of the acrylic resin was added to PVA) as a binder resin was further added to the aqueous solution of polyvinyl alcohol, so that the mesh-like network of polyvinyl alcohol was not formed, and the PF value was almost the same as the PF value of Comparative Example 1A, and was not improved.

From the above results, it can be seen that the method for producing the filter material for an air filter according to the present embodiments can provide a method for producing the filter material for an air filter having improved filter performance in a relatively short time using polyvinyl alcohol.

Test B: Examination of form containing cationic surfactant

Test B shows that inclusion of surfactants, particularly cationic surfactant, results in higher PF values than in Test A without surfactant. That is, Examples 1B to 8B and Example 10B containing cationic surfactant have higher PF values than Examples 12B to 18B not containing cationic surfactant. However, the PF values of Examples 12B to 18B are almost equal to the PF values of Examples 1A to 11A in Test A.

(Example 1B)

[Adhesion/drying of polyvinyl alcohol]

A polyvinyl alcohol aqueous solution was prepared so that the concentration of the polyvinyl alcohol (saponification degree 88 mol%, polymerization degree 3500, PVA 95-88, manufactured by Kuraray Co., Ltd.) was 0.07% and the concentration of the surfactant (alkyltrimethylammonium chloride, cationic surfactant, Catiogen TML, manufactured by DKS Co. Ltd.) was 0.0035%, and a polyvinyl alcohol aqueous solution adhered in an amount shown in Table 4 by two-fluid nozzle spray to a nonwoven fabric (hereinafter, referred to as a "support") composed of glass fibers (made of 22 parts of ultrafine glass fibers having an average fiber diameter of 0.65 um, 63 parts of ultrafine glass fibers having an average fiber diameter of 2.4 gm, and 15 parts of chopped glass fibers having an average fiber diameter of 6 um) having a basis weight of 51 g/m$^2$ and a pressure loss of 65 Pa as the support, and dried at 190°C by a hot air dryer to obtain the filter material for an air filter. The total adhesion amount of polyvinyl alcohol and the surfactant to the support was 0.39%.

(Example 2B)

The filter material for an air filter was obtained in the same manner as in Example 1B except that the polyvinyl alcohol aqueous solution was changed so that the concentration of the surfactant was 0.0070%, and the amount of the polyvinyl alcohol aqueous solution to adhere was changed to the amount shown in Table 4. The total adhesion amount of polyvinyl alcohol and the surfactant to the support was 0.36%.

(Example 3B)

The filter material for an air filter was obtained in the same manner as in Example 1B except that the polyvinyl alcohol aqueous solution was changed so that the concentration of the surfactant (perfluoroalkyl trialkyl ammonium salt, fluorine-based/cationic surfactant, Surflon S-221, manufactured by AGC Seimi Chemical Co., Ltd.) was 0.0007%, and the amount of the polyvinyl alcohol aqueous solution to adhere was changed to the amount shown in Table 4. The total adhesion amount of polyvinyl alcohol and the surfactant to the support was 0.35%.

(Example 4B)

The filter material for an air filter was obtained in the same manner as in Example 1B except that the polyvinyl alcohol aqueous solution was changed so that the concentration of the surfactant (perfluoroalkyl trialkyl ammonium salt, fluorine-based/cationic surfactant, Surflon S-221, manufactured by AGC Seimi Chemical Co., Ltd.) was 0.0035%, and the amount of the polyvinyl alcohol aqueous solution to adhere was changed to the amount shown in Table 4. The total adhesion amount of polyvinyl alcohol and the surfactant to the support was 0.36%.

(Example 5B)

The filter material for an air filter was obtained in the same manner as in Example 1B except that the polyvinyl alcohol aqueous solution was changed so that the concentration of the surfactant (perfluoroalkyl trialkyl ammonium salt, fluorine-based/cationic surfactant, Surflon S-221, manufactured by AGC Seimi Chemical Co., Ltd.) was 0.0070%, and the amount of the polyvinyl alcohol aqueous solution to adhere was changed to the amount shown in Table 4. The total adhesion amount of polyvinyl alcohol and the surfactant to the support was 0.39%.

(Example 6B)

The filter material for an air filter was obtained in the same manner as in Example 1B except that the polyvinyl alcohol aqueous solution was changed so that the concentration of the surfactant (perfluoroalkyl trialkyl ammonium salt, fluorine-based/cationic surfactant, Surflon S-221, manufactured by AGC Seimi Chemical Co., Ltd.) was 0.0105%, and the amount of the polyvinyl alcohol aqueous solution to adhere was changed to the amount shown in Table 4. The total adhesion amount of polyvinyl alcohol and the surfactant to the support was 0.42%.

(Example 7B)

The filter material for an air filter was obtained in the same manner as in Example 1B except that the polyvinyl alcohol aqueous solution was changed so that the concentration of the surfactant (perfluoroalkyl trialkyl ammonium salt, fluorine-based/cationic surfactant, Surflon S-221, manufactured by AGC Seimi Chemical Co., Ltd.) was 0.0140%, and the amount of the polyvinyl alcohol aqueous solution to adhere was changed to the amount shown in Table 4. The total adhesion amount of polyvinyl alcohol and the surfactant to the support was 0.41%.

(Example 8B)

The filter material for an air filter was obtained in the same manner as in Example 1B except that the polyvinyl alcohol aqueous solution was changed so that the concentration of the surfactant (perfluoroalkyl trialkyl ammonium salt, fluorine-based/cationic surfactant, Surflon S-221, manufactured by AGC Seimi Chemical Co., Ltd.) was 0.0210%, and the amount of the polyvinyl alcohol aqueous solution to adhere was changed to the amount shown in Table 4. The total adhesion amount of polyvinyl alcohol and the surfactant to the support was 0.43%.

(Example 10B)

The filter material for an air filter was obtained in the same manner as in Example 1B except that the polyvinyl alcohol aqueous solution was changed so that the concentration of the polyvinyl alcohol (Saponification degree 88 mol%, polymerization degree 4500, PVA-245, manufactured by Kuraray Co., Ltd.) was 0.07% and the concentration of the surfactant was 0.0070%, and the amount of the polyvinyl alcohol aqueous solution to adhere was changed to the amount shown in Table 4. The total adhesion amount of polyvinyl alcohol and the surfactant to the support was 0.39%.

(Comparative Example 1B)

The untreated "support" composed of glass fiber of Example 1B was directly used as an air filter material.

(Example 12B)

The filter material for an air filter was obtained in the same manner as in Example 1B except that the polyvinyl alcohol aqueous solution was changed so that the concentration of the polyvinyl alcohol (Saponification degree 88 mol%, polymerization degree 3500, PVA 95-88, manufactured by Kuraray Co., Ltd.) was 0.07% and the concentration of the surfactant was 0%, and the amount of the polyvinyl alcohol aqueous solution to adhere was changed to the amount shown in Table 4. The total adhesion amount of polyvinyl alcohol and the surfactant to the support was 0.39%.

(Example 13B)

The filter material for an air filter was obtained in the same manner as in Example 1B except that the polyvinyl alcohol aqueous solution was changed so that the concentration of the surfactant (sodium salt of polyoxyethylene tridecyl ether sulfate, anionic surfactant, HITENOL 330T, manufactured by DKS Co. Ltd.) was 0.0035%, and the amount of the polyvinyl alcohol aqueous solution to adhere was changed to the amount shown in Table 5. The total adhesion amount of polyvinyl alcohol and the surfactant to the support was 0.39%.

(Example 14B)

The filter material for an air filter was obtained in the same manner as in Example 1B except that the polyvinyl alcohol aqueous solution was changed so that the concentration of the surfactant (sodium salt of polyoxyethylene tridecyl ether sulfate, anionic surfactant, HITENOL 330T, manufactured by DKS Co. Ltd.) was 0.0070%, and the amount of the polyvinyl alcohol aqueous solution to adhere was changed to the amount shown in Table 5. The total adhesion amount of polyvinyl alcohol and the surfactant to the support was 0.38%.

(Example 15B)

The filter material for an air filter was obtained in the same manner as in Example 1B except that the polyvinyl alcohol aqueous solution was changed so that the concentration of the surfactant (sodium salt of polyoxyethylene tridecyl ether sulfate, anionic surfactant, HITENOL 330T, manufactured by DKS Co. Ltd.) was 0.0105%, and the amount of the polyvinyl alcohol aqueous solution to adhere was changed to the amount shown in Table 5. The total adhesion amount of polyvinyl alcohol and the surfactant to the support was 0.39%.

(Example 16B)

The filter material for an air filter was obtained in the same manner as in Example 1B except that the polyvinyl alcohol aqueous solution was changed so that the concentration of the surfactant (Perfluoroalkyl compound, fluorine-based/amphoteric surfactant, Surflon S-232, manufactured by AGC Seimi Chemical Co., Ltd.) was 0.0035%, and the amount of the polyvinyl alcohol aqueous solution to adhere was changed to the amount shown in Table 5. The total adhesion amount of polyvinyl alcohol and the surfactant to the support was 0.36%.

(Example 17B)

The filter material for an air filter was obtained in the same manner as in Example 1B except that the polyvinyl alcohol aqueous solution was changed so that the concentration of the surfactant (Perfluoroalkyl compound, fluorine-based/amphoteric surfactant, Surflon S-232, manufactured by AGC Seimi Chemical Co., Ltd.) was 0.0070%, and the amount of the polyvinyl alcohol aqueous solution to adhere was changed to the amount shown in Table 5. The total adhesion amount of polyvinyl alcohol and the surfactant to the support was 0.38%.

(Example 18B)

The filter material for an air filter was obtained in the same manner as in Example 1B except that the polyvinyl alcohol aqueous solution was changed so that the concentration of the surfactant (Perfluoroalkyl compound, fluorine-based/amphoteric surfactant, Surflon S-232, manufactured by AGC Seimi Chemical Co., Ltd.) was 0.0105%, and the amount of the polyvinyl alcohol aqueous solution to adhere was changed to the amount shown in Table 5. The total adhesion amount of polyvinyl alcohol and the surfactant to the support was 0.39%.

In Examples 1B to 8B, Example 10B, and Examples 12B to 18B, the evaporation rate of the solvent in the polyvinyl alcohol aqueous solution was about 171 (g/m$^2$)/min.

Preparation conditions and physical property values of each filter material for an air filter obtained in the Examples and Comparative Examples are shown in Tables 4 and 5. Physical property values were measured by the following methods.

[Table 4]

| | SOLID CONTENT CONCENTRATION OF PVA IN AQUEOUS SOLUTION (MASS%) | SOLID CONTENT CONCENTRATION OF SURFACTANT IN AQUEOUS SOLUTION (MASS%) | AMOUNT OF SURFACTANT ADDED ON 100 PARTS BY MASS OF PVA (PART BY MASS) | TYPE OF SURFACTANT | IONICITY OF SURFACTANT | AMOUNT OF PVA AQUEOUS SOLUTION TO ADHERE TO SUPPORT (g/m$^2$) | TOTAL ADHESION AMOUNT OF PVA AND SURFACTANT (%) | PRESSURE LOSS (Pa) | 0.10-0.15μm | | GURLEY STIFFNESS (mN) | TENSILE STRENGTH (kN/m) |
|---|---|---|---|---|---|---|---|---|---|---|---|---|
| | | | | | | | | | PARTICLE PENETRATION (%) | PF VALUE | | |
| COMPARATIVE EXAMPLE 1B | - | - | - | - | - | - | - | 65 | 19.88 | 10.6 | 3.40 | 0.24 |
| EXAMPLE 12B | 0.07 | 0 | 0 | - | - | 280.1 | 0.39 | 85 | 6.30 | 13.9 | 4.71 | 0.51 |
| EXAMPLE 1B | 0.07 | 0.0035 | 5 | ALKYLTRIMETHYLAMMONIUM CHLORIDE | CATIONIC | 250.5 | 0.37 | 95 | 3.12 | 15.6 | 4.74 | 0.49 |
| EXAMPLE 2B | 0.07 | 0.0070 | 10 | ALKYLTRIMETHYLAMMONIUM CHLORIDE | CATIONIC | 230.6 | 0.36 | 87 | 3.09 | 17.0 | 4.81 | 0.51 |
| EXAMPLE 3B | 0.07 | 0.0007 | 1 | PERFLUOROALKYL TRIALKYL AMMONIUM SALT | FLUORINE-BASED / CATIONIC | 249.0 | 0.35 | 84 | 5.35 | 14.8 | 4.78 | 0.52 |
| EXAMPLE 9B | 0.07 | 0.0035 | 5 | PERFLUOROALKYL TRIALKYL AMMONIUM SALT | FLUORINE-BASED / CATIONIC | 241.8 | 0.36 | 85 | 5.62 | 14.4 | 4.80 | 0.46 |
| EXAMPLE 5B | 0.07 | 0.0070 | 10 | PERFLUOROALKYL TRIALKYL AMMONIUM SALT | FLUORINE-BASED / CATIONIC | 253.1 | 0.39 | 86 | 5.01 | 14.8 | 4.72 | 0.50 |
| EXAMPLE 6B | 0.07 | 0.0105 | 15 | PERFLUOROALKYL TRIALKYL AMMONIUM SALT | FLUORINE-BASED / CATIONIC | 258.2 | 0.42 | 88 | 3.05 | 16.9 | 4.75 | 0.47 |
| EXAMPLE 7B | 0.07 | 0.0140 | 20 | PERFLUOROALKYL TRIALKYL AMMONIUM SALT | FLUORINE-BASED / CATIONIC | 243.9 | 0.41 | 85 | 3.97 | 16.2 | 4.78 | 0.48 |

(continued)

| | SOLID CONTENT CONCENTRATION OF PVA IN AQUEOUS SOLUTION (MASS%) | SOLID CONTENT CONCENTRATION OF SURFACTANT IN AQUEOUS SOLUTION (MASS%) | AMOUNT OF SURFACTANT ADDED ON 100 PARTS BY MASS OF PVA (PART BY MASS) | TYPE OF SURFACTANT | IONICITY OF SURFACTANT | AMOUNT OF PVA AQUEOUS SOLUTION TO ADHERE TO SUPPORT (g/m$^2$) | TOTAL ADHESION AMOUNT OF PVA AND SURFACTANT (%) | PRESSURE LOSS (Pa) | 0.10-0.15μm | | GURLEY STIFFNESS (mN) | TENSILE STRENGTH (kN/m) |
|---|---|---|---|---|---|---|---|---|---|---|---|---|
| | | | | | | | | | PARTICLE PENETRATION (%) | PF VALUE | | |
| EXAMPLE 8B | 0.07 | 0.0210 | 30 | PERFLUOROALKYL TRIALKYL AMMONIUM SALT | FLUORINE-BASED / CATIONIC | 237.2 | 0.43 | 81 | 4.40 | 16.4 | 4.92 | 0.51 |
| EXAMPLE 10B | 0.07 | 0.0070 | 10 | ALKYLTRIMETHYLAMMONIUM CHLORIDE | CATIONIC | 250.0 | 0.39 | 85 | 3.22 | 17.2 | 4.95 | 0.50 |

[Table 5]

| | SOLID CONTENT CONCENTRATION OF PVA IN AQUEOUS SOLUTION (MASS%) | SOLID CONTENT CONCENTRATION OF SURFACTANT IN AQUEOUS SOLUTION (MASS%) | AMOUNT OF SURFACTANT ADDED ON 100 PARTS BY MASS OF PVA (PART BY MASS) | TYPE OF SURFACTANT | IONICITY OF SURFACTANT | AMOUNT OF PVA AQUEOUS SOLUTION TO ADHERE TO SUPPORT ($g/m^2$) | TOTAL ADHESION AMOUNT OF PVA AND SURFACTANT (%) | PRESSURE LOSS (Pa) | 0.10-0.15pm | | | GURLEY STIFFNESS (mN) | TENSILE STRENGTH (kN/m) |
|---|---|---|---|---|---|---|---|---|---|---|---|---|---|
| | | | | | | | | | PARTICLE PENETRATION (%) | PF VALUE | NOTE | | |
| EXAMPLE 13B | 0.07 | 0.0035 | 5 | SODIUM SALT OF POLYOXYETHYLENE TRIDECYL ETHER SULFATE | ANIONIC | 264.8 | 0.39 | 79 | 8.62 | 13.2 | | 4.77 | 0.46 |
| EXAMPLE 14B | 0.07 | 0.0070 | 10 | SODIUM SALT OF POLYOXYETHYLENE TRIDECYL ETHER SULFATE | ANIONIC | 249.0 | 0.38 | 74 | 11.54 | 12.4 | | 4.79 | 0.48 |
| EXAMPLE 15B | 0.07 | 0.0105 | 15 | SODIUM SALT OF POLYOXYETHYLENE TRIDECYL ETHER SULFATE | ANIONIC | 241.3 | 0.39 | 71 | 16.20 | 10.9 | | 4.79 | 0.47 |
| EXAMPLE 16B | 0.07 | 0.0035 | 5 | PERFLUOROALKYL COMPOUND | FLUORINE-BASED/AMPHOTERIC | 244.4 | 0.36 | 80 | 7.41 | 13.9 | | 4.81 | 0.48 |
| EXAMPLE 17B | 0.07 | 0.0070 | 10 | PERFLUOROALKYL COMPOUND | FLUORINE-BASED/AMPHOTERIC | 244.9 | 0.38 | 79 | 8.13 | 13.5 | | 4.79 | 0.49 |

(continued)

| | SOLID CONTENT CONCENTRATION OF PVA IN AQUEOUS SOLUTION (MASS%) | SOLID CONTENT CONCENTRATION OF SURFACTANT IN AQUEOUS SOLUTION (MASS%) | AMOUNT OF SURFACTANT ADDED ON 100 PARTS BY MASS OF PVA (PART BY MASS) | TYPE OF SURFACTANT | IONICITY OF SURFACTANT | AMOUNT OF PVA AQUEOUS SOLUTION TO ADHERE TO SUPPORT (g/m$^2$) | TOTAL ADHESION AMOUNT OF PVA AND SURFACTANT (%) | PRESSURE LOSS (Pa) | 0.10-0.15pm | | | GURLEY STIFFNESS (mN) | TENSILE STRENGTH (kN/m) |
|---|---|---|---|---|---|---|---|---|---|---|---|---|---|
| | | | | | | | | | PARTICLE PENETRATION (%) | PF VALUE | NOTE | | |
| EXAMPLE 18B | 0.07 | 0.0105 | 15 | PERFLUOROALKYL COMPOUND | FLUORINE-BASED/ AMPHOTERIC | 243.9 | 0.39 | 74 | 9.58 | 13.5 | | 4.77 | 0.47 |
| COMPARATIVE EXAMPLE 9B | 0.07 | 0 | 0 | - | - | 244.0 | 0.34 | 68 | 22.92 | 9.2 | ACRYLIC RESIN-BASED BINDER WAS ADDED TO PVA AT 1.0% | 4.80 | 0.50 |
| COMPARATIVE EXAMPLE 10B | 0.07 | 0.007 | 10 | ALKYLTRIMETHYLAMMONIUM CHLORIDE | CATIONIC | 243.0 | 0.38 | 69 | 21.63 | 9.5 | CATIONIC SURFACTANT IS FURTHER ADDED IN COMPARATIVE EXAMPLE 9 | 4.79 | 0.47 |

(continued)

| | SOLID CONTENT CONCENTRATION OF PVA IN AQUEOUS SOLUTION (MASS%) | SOLID CONTENT CONCENTRATION OF SURFACTANT IN AQUEOUS SOLUTION (MASS%) | AMOUNT OF SURFACTANT ADDED ON 100 PARTS BY MASS OF PVA (PART BY MASS) | TYPE OF SURFACTANT | IONICITY OF SURFACTANT | AMOUNT OF PVA AQUEOUS SOLUTION TO ADHERE TO SUPPORT (g/m$^2$) | TOTAL ADHESION AMOUNT OF PVA AND SURFACTANT (%) | PRESSURE LOSS (Pa) | 0.10-0.15pm | | | GURLEY STIFFNESS (mN) | TENSILE STRENGTH (kN/m) |
|---|---|---|---|---|---|---|---|---|---|---|---|---|---|
| | | | | | | | | | PARTICLE PENETRATION (%) | PF VALUE | NOTE | | |
| COMPARATIVE EXAMPLE 11B | 0.07 | 0 | 0 | - | - | 241.0 | 0.31 | 71 | 17.76 | 10.3 | DRYING TEMPERATURE 120°C | 4.22 | 0.45 |
| COMPARATIVE EXAMPLE 12B | 0.07 | 0.007 | 10 | ALKYLTRIMETHYLAMMONIUM CHLORIDE | CATIONIC | 242.0 | 0.37 | 72 | 15.85 | 10.9 | CATIONIC SURFACTANT IS FURTHER ADDED IN COMPARATIVE EXAMPLE 11 | 4.29 | 0.44 |

alcohol was formed. The number average fiber diameter of the nanofiber was about 40 nm. It was confirmed that the nanofiber of polyvinyl alcohol was formed, and a mesh-like network of polyvinyl alcohol was present in the pore serving as the fluid permeation path.

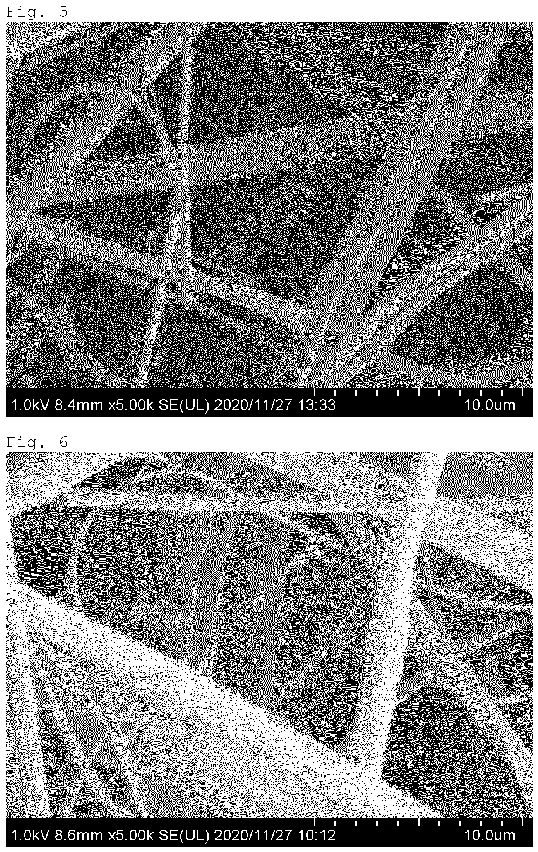

It can be seen that any support of Examples 1B to 8B, and Example 10B showed higher PF values than the support of Comparative Example 1B. Fig. 5 shows an SEM observation image of the air filter of Example 2B. According to Fig. 5, by drying polyvinyl alcohol at high speed at a high temperature of 190°C in the presence of a cationic surfactant, a fine nanofiber network was provided, and a suitable PF value could be obtained.

Fig. 6 shows an SEM observation image of the air filter of Example 12B. When Fig. 5 and Fig. 6 are compared with each other, both of them have the mesh-like network of polyvinyl alcohol in the pore serving as the fluid permeation path, and it is difficult to distinguish them at the resolution level of the SEM image. In Example 12B in which a cationic surfactant is not added, the PF value of 0.10-0.15 um is 13.9, which is sufficiently high, but in Example 2B in which a cationic surfactant is added, the PF value of 0.10-0.15 um is 17.0, which is further high. This is presumed to be because the mesh-like network of polyvinyl alcohol in Example 2B is stretched so as to further increase the PF value in a further ultrafine region that cannot be observed in the SEM observation image. Also in Examples 1B, 3B to 8B, and 10B, it is presumed that the mesh-like network of polyvinyl alcohol is stretched so as to further increase the PF value by the addition of the cationic surfactant.

In Example 2B, the polymerization degree of polyvinyl alcohol was 3500, and in Example 10B, the polymerization degree of polyvinyl alcohol was 4500, but in Example 2B and Example 10B, equivalent high PF values were obtained.

On the other hand, in Examples 13B to 15B, an anionic surfactant was added to the polyvinyl alcohol aqueous solution and each PF value was better than the PF value of Comparative Example 1B was obtained, but each PF value was almost equal to or slightly lower than the PF value of Example 12B to which no surfactant was added. From this, it was found that addition of a cationic surfactant instead of an anionic surfactant is more useful for obtaining a high PF value.

In Examples 16B to 18B, a fluorine-based amphoteric surfactant is added to the polyvinyl alcohol aqueous solution and each PF value was better than the PF value of Comparative Example 1B was obtained, but each PF value was almost equal to or slightly lower than the PF value of Example 12B to which no surfactant was added. From this, it was found that addition of a cationic surfactant instead of a fluorine-based amphoteric surfactant is useful for obtaining a high PF value.

(Comparative Example 9B)

The filter material for an air filter was obtained in the same manner as in Example 12B except that an acrylic resin (trade name: Ultrasol FB-19/manufactured by AICA Kogyo Co., Ltd.) was further added to the aqueous solution of polyvinyl alcohol so that the concentration of the acrylic resin in the aqueous solution was 0.0007% (an acrylic resin-based binder was added to PVA at 1.0%), and the amount of the aqueous solution of polyvinyl alcohol containing the acrylic resin to adhere was changed to 244.0 g/m$^2$. The total adhesion amount of the polyvinyl alcohol and the acrylic resin to the support was 0.34%. The pressure loss was 68 Pa, the particle penetration was 77.08%, and the PF value at 0.10-0.15 um was 9.2. In Comparative Example 9B, a cationic surfactant was not added to the polyvinyl alcohol aqueous solution, but a slight amount of a binder resin (1.0% of an acrylic resin-based binder was added to PVA) other than polyvinyl alcohol, added to the polyvinyl alcohol aqueous solution, kept out of forming the mesh-like network of polyvinyl alcohol, the PF value was equal to or less than that of Comparative Example 1B, and the PF value was not improved.

(Comparative Example 10B)

The filter material for an air filter was obtained in the same manner as in Comparative Example 9B except that the polyvinyl alcohol aqueous solution was changed so that the concentration of the surfactant was 0.0070%, and the amount of the polyvinyl alcohol aqueous solution to adhere was changed to 243.0 g/m$^2$. Even though a cationic surfactant was further added to the polyvinyl alcohol aqueous solution under the conditions of Comparative Example 9B, a slight amount of a binder resin other than polyvinyl alcohol (1.0% of an acrylic resin-based binder was added to PVA), added to the polyvinyl alcohol aqueous solution, kept out of forming the mesh-like network of polyvinyl alcohol, the PF value was equal to or less than that of Comparative Example 1B, and the PF value was not improved.

(Comparative Example 11B)

The filter material for an air filter was obtained in the same manner as in Example 12B except that the drying temperature was changed to 120°C, and the amount of the polyvinyl alcohol aqueous solution to adhere was changed to an amount shown as 241.0 g/m$^2$. The adhesion amount of polyvinyl alcohol to the support was 0.31%. The evaporation rate of the solvent in the polyvinyl alcohol aqueous solution was approximately 87 (g/m$^2$)/min. The pressure loss was 71 Pa, the particle penetration was 82.24%, and the PF value at 0.10-0.15 μm was 10.3. In Comparative Example 10B, since it was not dry enough, the mesh-like network of polyvinyl alcohol was not formed, and a polyvinyl alcohol film-shaped laminate was formed.

(Comparative Example 12B)

The filter material for an air filter was obtained in the same manner as in Comparative Example 11B except that the polyvinyl alcohol aqueous solution was changed so that the concentration of the surfactant was 0.0070%, and the amount of the polyvinyl alcohol aqueous solution to adhere was changed to 242.0 g/m$^2$. Although a cationic surfactant was further added to the polyvinyl alcohol aqueous solution under the conditions of Comparative Example 11B, the mesh-like network of polyvinyl alcohol was not formed due to insufficient drying and a polyvinyl alcohol film-like laminate was formed, and the PF value of 0.10-0.15 um was equivalent to that of Comparative Example 11B.

From the above results, it is found that the method for producing the filter material for an air filter according to the present embodiments can provide a method for producing the filter material for an air filter having improved filter performance in a relatively short time by using the polyvinyl alcohol aqueous solution containing the cationic surfactant. In the filter material for an air filter according to the present embodiments, for example, a PF value of 0.10-0.15 um is 14.0 or more. In this example, a PF value of 0.10-0.15 um was 14.4 or more.

Usually, as a method for increasing stiffness and tensile strength of a filter, a binder resin is added, but this causes a decrease in the PF value. Therefore, the stiffness and the PF value are usually in a trade-off relationship. According to the present invention, as shown in Tables 1 to 5, the stiffness and the tensile strength can be improved without significantly decreasing the PF value. For example, in Examples 1A to 11A, the Gurley stiffness is improved by 1 mN or more, and the tensile strength is improved by 0.2 kN/m or more as compared with Comparative Example 1A. In addition, in Examples 1B to 8B, 10B, and 12B to 18B, the Gurley stiffness is improved by 1 mN or more, and the tensile strength is improved by 0.2 kN/m or more as compared with Comparative Example 1B. When the stiffness and the tensile strength are improved, it is possible to control an increase in structural pressure loss due to deformation of the filter during ventilation after pleating. For example, it is possible to prevent the filter from becoming deformed over time during use.

## Claims

**1.** A method for producing a filter material for an air filter comprising:

an adhering step of getting a polyvinyl alcohol aqueous solution adhering to a support, having fluid permeability, to bring the support into a wet state; and
a drying step of drying the polyvinyl alcohol aqueous solution adhering to the support in a wet state at 140°C or higher,
wherein the polyvinyl alcohol aqueous solution contains no other binder resins than polyvinyl alcohol, and the support, after the drying step, has a mesh-like network of polyvinyl alcohol, in a pore serving as a fluid permeation path, by drying the polyvinyl alcohol aqueous solution.

**2.** The method for producing the filter material for an air filter according to claim 1, wherein the mesh-like network is composed of a nanofiber.

**3.** The method for producing the filter material for an air filter according to claim 2, wherein the nanofiber is a nanofiber having a number average fiber diameter of 10 to 500 nm.

**4.** The method for producing the filter material for an air filter according to any one of claims 1 to 3, wherein polyvinyl alcohol contained in the polyvinyl alcohol aqueous solution has a polymerization degree of 1500 to 6000.

**5.** The method for producing the filter material for an air filter according to any one of claims 1 to 4, wherein polyvinyl alcohol contained in the polyvinyl alcohol aqueous solution has a saponification degree of 80 to 98 mol%.

**6.** The method for producing the filter material for an air filter according to any one of claims 1 to 5, wherein a solid content concentration of polyvinyl alcohol in the polyvinyl alcohol aqueous solution is 0.01 to 0.20 mass%.

**7.** The method for producing the filter material for an air filter according to any one of claims 1 to 6, wherein an adhesion amount of polyvinyl alcohol to the support, after the drying step, is 0.05 to 1.00 mass%.

**8.** The method for producing the filter material for an air filter according to any one of claims 1 to 7, wherein an amount of the polyvinyl alcohol aqueous solution to adhere to the support is 50 g or more per 1 $m^2$ of the support.

**9.** The method for producing the filter material for an air filter according to any one of claims 1 to 8, wherein in the drying step, an evaporation rate of a solvent of the polyvinyl alcohol aqueous solution adhering to the support in the wet state is 100 g/min or more per 1 $m^2$ of the support.

**10.** The method for producing the filter material for an air filter according to any one of claims 1 to 9, wherein the polyvinyl alcohol aqueous solution further contains a cationic surfactant.

**11.** The method for producing the filter material for an air filter according to claim 10, wherein the cationic surfactant in the polyvinyl alcohol aqueous solution is added in an amount of 1 to 30 parts by mass based on 100 parts by mass of polyvinyl alcohol.

**12.** The method for producing the filter material for an air filter according to claim 10 or 11, wherein the total adhesion amount of the polyvinyl alcohol and the cationic surfactant to the support, after the drying step, is 0.05 to 1.30 mass%.

**13.** The method for producing the filter material for an air filter according to any one of claims 1 to 12, wherein the support is a nonwoven fabric, for a filter material, containing glass fiber as a main component.

**14.** A filter material for an air filter, **characterized in** comprising:

a support having fluid permeability; and
a mesh-like network of polyvinyl alcohol formed in a pore serving as the fluid permeation path of the support, wherein
the mesh-like network is formed of the nanofiber,
a polymerization degree of the polyvinyl alcohol is 1500 to 6000,
a saponification degree of the polyvinyl alcohol is 60 to 90 mol%,
an adhesion amount of the polyvinyl alcohol to the support is 0.05 to 1.00 mass%, and
no other binder resins than the polyvinyl alcohol are contained.

**15.** The filter material for an air filter according to claim 14, further comprising a cationic surfactant.

Fig. 1

1.0kV 8.4mm x5.00k SE(UL) 2021/01/15 11:30
10.0um

Fig. 2

1.0kV 8.4mm x5.00k SE(UL) 2020/11/27 11:44
10.0um

Fig. 3

1.0kV 8.6mm x5.00k SE(UL) 2021/01/15 12:07
10.0um

Fig. 4

1.0kV 8.4mm x5.00k SE(UL) 2020/07/03 15:43
10.0um

Fig. 5

1.0kV 8.4mm x5.00k SE(UL) 2020/11/27 13:33
10.0um

Fig. 6

1.0kV 8.6mm x5.00k SE(UL) 2020/11/27 10:12
10.0um

# INTERNATIONAL SEARCH REPORT

International application No. **PCT/JP2022/010321**

**A. CLASSIFICATION OF SUBJECT MATTER**

***B01D 39/00***(2006.01)i; ***B01D 39/16***(2006.01)i; ***B01D 39/20***(2006.01)i; ***C08J 9/40***(2006.01)i; ***D06M 15/333***(2006.01)i
FI: B01D39/00 B; B01D39/20 B; D06M15/333; C08J9/40 CEX; B01D39/16 A

According to International Patent Classification (IPC) or to both national classification and IPC

**B. FIELDS SEARCHED**

Minimum documentation searched (classification system followed by classification symbols)

B01D39/00-41/04; C08J9/00-9/42; B01D46/00-46/90; D06M13/00-15/715

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2008-194584 A (HOKUETSU PAPER MILLS LTD) 28 August 2008 (2008-08-28) claims 1, 4, paragraphs [0008], [0022], [0026]-[0028] | 1-9, 13-14<br>1-15 |
| Y | JP 2010-094580 A (HOKUETSU KISHU PAPER CO LTD) 30 April 2010 (2010-04-30) paragraphs [0020]-[0021], [0028], [0033]-[0037], [0049]-[0051], [0089] | 1-15 |
| A | WO 2018/221063 A1 (JAPAN VILENE CO LTD) 06 December 2018 (2018-12-06) entire text, all drawings | 1-15 |
| A | JP 2020-073271 A (HOKUETSU CORP CO LTD) 14 May 2020 (2020-05-14) entire text, all drawings | 1-15 |
| P, A | WO 2021/234946 A1 (HOKUETSU CORP CO LTD) 25 November 2021 (2021-11-25) entire text, all drawings | 1-15 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 April 2022** | **17 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/010321**

| Patent document cited in search report | Publication date (day/month/year) | Patent family member(s) | Publication date (day/month/year) |
|---|---|---|---|
| JP 2008-194584 A | 28 August 2008 | (Family: none) | |
| JP 2010-094580 A | 30 April 2010 | (Family: none) | |
| WO 2018/221063 A1 | 06 December 2018 | (Family: none) | |
| JP 2020-073271 A | 14 May 2020 | (Family: none) | |
| WO 2021/234946 A1 | 25 November 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008194584 A
- WO 2018221063 A1